(19) Europäisches Patentamt
European Patent Office
Office européen des brevets

(11) EP 4 068 637 A1

(12) EUROPEAN PATENT APPLICATION
published in accordance with Art. 153(4) EPC

(43) Date of publication:
05.10.2022 Bulletin 2022/40

(51) International Patent Classification (IPC):
H04B 1/12 (2006.01)          H03M 1/10 (2006.01)

(21) Application number: 20893071.9

(22) Date of filing: 26.11.2020

(52) Cooperative Patent Classification (CPC):
H03M 1/10; H04B 1/12; H04B 1/16

(86) International application number:
PCT/CN2020/131828

(87) International publication number:
WO 2021/104382 (03.06.2021 Gazette 2021/22)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 29.11.2019 CN 201911204739

(71) Applicant: Sanechips Technology Co., Ltd.
Shenzhen, Guangdong 518055 (CN)

(72) Inventors:
• LU, Tianji
  Shenzhen, Guangdong 518055 (CN)
• LU, Xiaofan
  Shenzhen, Guangdong 518055 (CN)
• ZHANG, Yulong
  Shenzhen, Guangdong 518055 (CN)

(74) Representative: Pennacchio, Salvatore Giovanni
et al
Jacobacci & Partners S.p.A.
Via Senato, 8
20121 Milano (IT)

(54) **BASELINE DRIFT ELIMINATION APPARATUS AND RECEIVER**

(57)      Provided are an apparatus for eliminating baseline drift and a receiver. The apparatus for eliminating baseline drift includes: an analog processing module, an analog-to-digital conversion module, a decision module, an error estimation module, a digital compensation acquisition module, a digital compensation module, an analog compensation acquisition module, an analog compensation module and a digital-to-analog conversion module, where the analog compensation acquisition module is configured to output a low-frequency error component included in a baseline drift error according to the baseline drift error output by the error estimation module, and the digital compensation acquisition module is configured to output a high-frequency error component included in the baseline drift error according to the baseline drift error. Therefore, when baseline drift is to be eliminated, on the one hand, baseline drift compensation can be rapidly and accurately carried out; and on the other hand, an influence of baseline drift on nonlinear distortion of an analog circuit is reduced, so as to improve accuracy of receiving a signal.

Fig. 1

EP 4 068 637 A1

## Description

## Technical Field

The invention relates to the technical field of circuits, in particular to an apparatus for eliminating baseline drift and a receiver.

## Background

According to the standards of Ethernet and high-speed serial communication receivers, isolation transformers or alternating-current couplers are commonly used to connect signals, so as to enhance signals, isolate interference and provide protection, and further to make the working state of each stage of circuit easier to adjust. The isolation transformer and the alternating-current coupler are physically equivalent to a high-pass filter to suppress a direct-current component and a low-frequency component of a signal, causing "baseline drift", that is, the signal seems to drift up and down intermittently. In addition, on account of increasing requirements for a communication rate, a transmission symbol having an extremely narrow pulse width and a multi-level modulation mode are often used in a communication system. In these working scenarios, baseline drift affects determination accuracy of the symbol to a severer extent, and further results in an increase in a bit error rate, which in turn restricts an increase in a transmission rate. Hence, baseline drift should be eliminated as much as possible.

In the conventional art, a baseline drift error is commonly computed in a digital domain and then is compensated for in the digital domain or an analog domain. In the case that the error is compensated for in the digital domain, despite a rapid and accurate digital circuit, baseline drift, which is introduced in a front end of a receiving circuit, still has an influence on the analog circuit placed in the front, such as an amplifier, an equalizer and a variable gain adjustment module, causing nonlinear distortion of the analog circuit. This defect cannot be overcome in the case of compensation in the digital domain. In the case that the error is compensated for in the analog domain, there is a need to loop a compensation value back to the analog circuit by means of a digital-to-analog converter, resulting in a relatively large loop delay accordingly and belated and inaccurate computation of a compensation quantity. Moreover, the analog circuit cannot be so accurate as the digital circuit due to its inherent characteristics.

Therefore, at present, when baseline drift is to be eliminated, accuracy and speed of baseline drift compensation and reduction of nonlinear distortion of an analog circuit cannot be taken into account at the same time.

## Summary

The invention provides an apparatus for eliminating baseline drift and a receiver, so as to solve the technical problem that at present, accuracy and speed of baseline drift compensation and reduction of nonlinear distortion of an analog circuit may not be taken into account at the same time.

An embodiment of the invention provides an apparatus for eliminating baseline drift. The apparatus includes:

an analog processing module, an analog-to-digital conversion module, a decision module, an error estimation module, a digital compensation acquisition module, a digital compensation module, an analog compensation acquisition module, an analog compensation module and a digital-to-analog conversion module.

An output end of a front-end module is connected to a first input end of the analog compensation module, an output end of the digital-to-analog conversion module is connected to a second input end of the analog compensation module, and an output end of the analog compensation module is connected to an input end of the analog processing module.

An output end of the analog processing module is connected to an input end of the analog-to-digital conversion module.

An output end of the analog-to-digital conversion module is connected to a first input end of the digital compensation module, an output end of the digital compensation acquisition module is connected to a second input end of the digital compensation module, and an output end of the digital compensation module is connected to an input end of the decision module.

An output end of the decision module is connected to an input end of the error estimation module, an output end of the error estimation module is connected to an input end of the digital compensation acquisition module, and the output end of the error estimation module is further connected to an input end of the analog compensation acquisition module.

An output end of the analog compensation acquisition module is connected to an input end of the digital-to-analog conversion module.

The error estimation module is configured to output a baseline drift error according to a determination error output by the decision module, the digital compensation acquisition module is configured to output a high-frequency error component in the baseline drift error according to the baseline drift error, the analog compensation acquisition module is configured to output a low-frequency error component in the baseline drift error according to the baseline drift error, the analog compensation module is configured to compensate for the analog processing module according to the low-frequency error component processed by a digital-to-analog conversion, and the digital compensation module is configured to compensate for the decision module according to the high-frequency error component.

An embodiment of the invention provides a receiver. The receiver includes a front-end module and any apparatus for eliminating baseline drift of the embodiments of the invention.

More descriptions of the above embodiments, the other aspects and an implementation mode of the invention are provided in brief description of the accompanying drawings, detailed description of the embodiments and claims.

## Brief Description of the Drawings

Fig. 1 is a structural schematic diagram of an apparatus for eliminating baseline drift provided in an embodiment;

Fig. 2 is a structural schematic diagram of another apparatus for eliminating baseline drift provided in an embodiment;

Fig. 3 is a structural schematic diagram of yet another apparatus for eliminating baseline drift provided in an embodiment;

Fig. 4 is a structural schematic diagram of still another apparatus for eliminating baseline drift provided in an embodiment;

Fig. 5 is a structural schematic diagram of yet another apparatus for eliminating baseline drift provided in an embodiment;

Fig. 6 is a structural schematic diagram of yet another apparatus for eliminating baseline drift provided in an embodiment;

Fig. 7 is a structural schematic diagram of a lead compensation circuit; and

Fig. 8 is a structural schematic diagram of a first integrating circuit.

## Detailed Description of the Embodiments

In order to make objectives, technical solutions and advantages of the invention clearer, the embodiments of the invention will be described in detail below with reference to the accompanying drawings. It should be noted that the embodiments of the invention and features in the embodiments may be combined with one another if there is no conflict.

In Ethernet and high-speed serial communication receivers, isolation transformers or alternating-current couplers are commonly used to connect signals. These apparatuses may be equivalent to a resistor-capacitance (RC) circuit, and a transfer function thereof is expressed as: $U_{out} = \dfrac{sRC}{1 + sRC}$. On the basis of the transfer function, it can be seen that these apparatuses are equivalent to a high-pass filter, which will cause loss of direct-current and low-frequency components, so as to enable a received signal to continuously move up and down, that is, baseline drift occurs, thereby affecting correct reception of the signal.

The embodiment provides an apparatus for eliminating baseline drift. The apparatus may be arranged in a receiver to eliminate baseline drift caused by a front-end module in the receiver, such as an isolation transformer or an alternating-current coupler. The apparatus may compensate for baseline drift in both a digital domain and an analog domain, such that accuracy and speed of baseline drift compensation and reduction of an influence of baseline drift on nonlinear distortion of an analog circuit are all taken into account, thereby ensuring accuracy of receiving a signal.

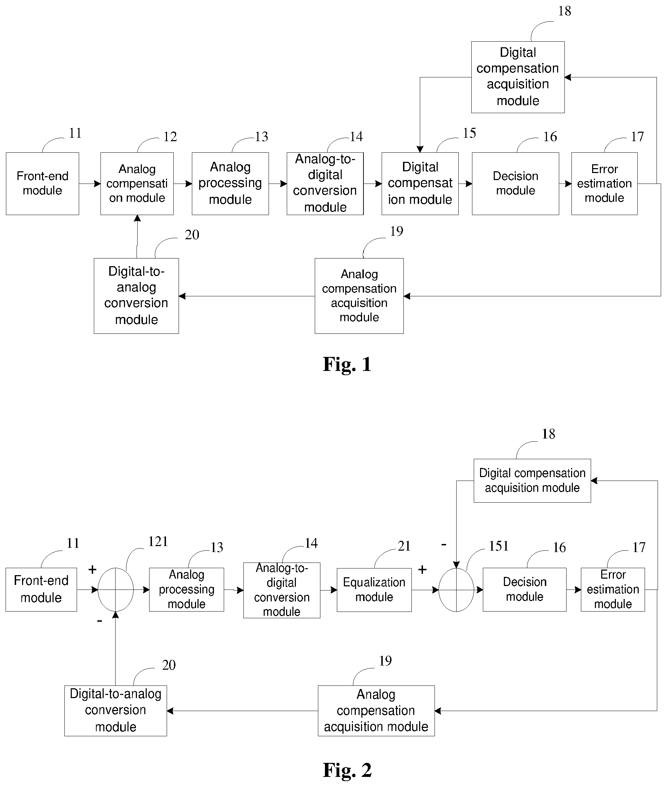

Fig. 1 is a structural schematic diagram of an apparatus for eliminating baseline drift provided in an embodiment. As shown in Fig. 1, the apparatus for eliminating baseline drift provided in the embodiment includes: an analog processing module 13, an analog-to-digital conversion module 14, a decision module 16, an error estimation module 17, a digital compensation acquisition module 18, a digital compensation module 15, an analog compensation acquisition module 19, an analog compensation module 12 and a digital-to-analog conversion module 20.

An output end of a front-end module 11 is connected to a first input end of an analog compensation module 12. An output end of the digital-to-analog conversion module 20 is connected to a second input end of the analog compensation module 12. An output end of the analog compensation module 12 is connected to an input end of the analog processing module 13.

An output end of the analog processing module 13 is connected to an input end of the analog-to-digital conversion module 14.

An output end of the analog-to-digital conversion module 14 is connected to a first input end of the digital compensation module 15. An output end of the digital compensation acquisition module 18 is connected to a second input end of the digital compensation module 15. An output end of the digital compensation module 15 is connected to an input end of the decision module 16.

An output end of the decision module 16 is connected to an input end of the error estimation module 17. An output end of the error estimation module 17 is connected to an input end of the digital compensation acquisition module 18. The output end of the error estimation module 17 is further connected to an input end of the analog compensation acquisition module 19.

An output end of the analog compensation acquisition module 19 is connected to an input end of the digital-to-analog conversion module 20.

The error estimation module 17 is configured to output a baseline drift error according to a determination error output by the decision module 16. The digital compensation acquisition module 18 is configured to output a high-frequency error component in the baseline drift error according to the baseline drift error. The analog compensation acquisition module 19 is configured to output a low-frequency error component in the baseline drift error according to the baseline drift error. The analog compensation module 12 is configured to compensate for the analog processing module 13 according to the low-frequency error component processed by a digital-to-analog conversion. The digital compensation module 15 is configured to compensate for the decision module 16 according to the high-frequency error component.

In an embodiment, the front-end module 11 may be an isolation transformer or an alternating-current coupler.

In an embodiment, the analog processing module 13 may include an analog amplifying circuit, a channel compensation circuit, a variable-gain amplifier (VGA) and other circuits for processing an analog signal.

In an embodiment, the decision module 16 determines which level signal that a received digital signal belongs to according to the received digital signal and a standard signal level, so as to recover a transmitted information bit. The decision module 16 may output the determination error according to an error between the received digital signal and the standard signal level. The error estimation module 17 outputs the baseline drift error according to the determination error. The baseline drift error here includes a direction and a magnitude of baseline drift. Then, the baseline drift error is looped back to a signal input end to be subjected to subtraction with an input signal, so as to eliminate baseline drift. In order to better eliminate baseline drift, the apparatus for eliminating baseline drift is required to have desirable steady-state compensation accuracy and relatively fast response speed to keep up with sharp change drift.

In the error estimation module 17, the baseline drift error is output as a whole. In the embodiment, the digital compensation acquisition module 18 and the analog compensation acquisition module 19 are arranged to identify a component in the baseline drift error suitable for being compensated for in an analog domain, that is, the analog processing module 13, and to identify a component in the baseline drift error suitable for being compensated for in a digital domain.

In the embodiment, two compensation loops are included, where the digital compensation acquisition module 18 and the digital compensation module 15 constitute a digital compensation inner loop. The analog compensation acquisition module 19, the digital-to-analog conversion module 20 and the analog compensation module 12 constitute an analog compensation outer loop.

By reason of not passing through the analog processing module 13, the analog-to-digital conversion module 14, etc, the digital compensation inner loop has a loop delay much smaller than that of the analog compensation outer loop. Illustratively, in the case that the digital compensation inner loop has a delay of 30 nanoseconds, the analog compensation outer loop is likely to have a delay of 200 nanoseconds.

The baseline drift error includes a fast change part and a slow change part when described in the terms of response speed, and includes a coarse compensation part and a fine compensation part when described in the terms of compensation accuracy.

Since the analog compensation outer loop has a relatively large loop delay, a slow response speed and low compensation accuracy, the analog compensation acquisition module 19 may be used to identify the low-frequency error component in the baseline drift error, that is, a slow change component, which is compensated for at the analog processing module 13, so as to reduce nonlinear distortion of the analog processing circuit. Since the digital compensation inner loop has a relatively small loop delay, a fast response speed and high compensation accuracy, the digital compensation acquisition module 18 may be used to identify the high-frequency error component in the baseline drift error, that is, a sharp change component, which is compensated for at a digital circuit, that is, in the decision module 16, so as to improve a compensation speed. In an illustrative embodiment, since a signal subjected to analog compensation is further input to the digital circuit, the digital compensation inner loop may further correct a residual error after the analog processing module 13 is compensated for, so as to improve compensation accuracy.

Due to characteristics, baseline drift is relatively slow and stable most of the time, and sharply changes sometimes. Therefore, in the apparatus provided in the embodiment, direct-current and low-frequency gains of the analog compensation outer loop are extremely high, the slow change part of baseline drift is accumulated to be eliminated, and the analog compensation outer loop plays a major role most of the time, which reduces nonlinear distortion of the analog processing module. Only in the case of severe baseline drift, the digital compensation inner loop will intervene to remove the sudden change part, such that the decision module is not affected by baseline drift. In addition, the residual error from the analog compensation outer loop will be further processed in the digital compensation inner loop, so as to improve compensation accuracy.

A working process of the apparatus for eliminating baseline drift provided in the embodiment is as follows. The front-end module 11 outputs a received analog signal to the analog compensation module 12. The analog compensation module 12 outputs an analog signal subjected to analog compensation to the analog processing module 13 according to the low-frequency error component subjected to digital-analog conversion and the analog signal output by the front-end module 11. In the process, the analog compensation module 12 compensates for the analog processing module 13 on the basis of the low-frequency error component processed by a digital-to-analog conversion. The analog signal subjected to analog compensation is processed by the analog processing module 13, and then is converted into a digital signal subjected to analog compensation after passing through the analog-to-digital conversion module 14. The digital compensation module 15 outputs a digital signal subjected to digital compensation to the decision module 16 according to the digital signal subjected to analog compensation and the high-frequency error component. In the process, the digital compensation module 15 compensates for the decision module 16 on the basis of the high-frequency error component. The decision module 16 carries out determination according to the digital signal subjected to digital compensation and outputs the determination error. The error estimation module 17 outputs the baseline drift error according to the determination error. The digital compensation acquisition module 18 is configured to output the high-frequency error component in the baseline drift error to the digital compensation module 15 according to the baseline drift error. The analog compensation acquisition module 19 is configured to output the low-frequency error component in the baseline drift error to the digital-to-analog conversion module 20 according to the baseline drift error. The digital-to-analog conversion module 20 carries out digital-to-analog conversion on the low-frequency error component to form a low-frequency error component processed by a digital-to-analog conversion to be output to the analog compensation module 12.

In an embodiment, the digital compensation module serves as a third adder (distinguished from the following adders, with "third" not indicating a sequence) and is configured to output a difference between an output quantity of the analog-to-digital conversion module and the high-frequency error component.

In an embodiment, the analog compensation module serves as a fourth adder and is configured to output a difference between an output quantity of the front-end module and the low-frequency error component processed by a digital-to-analog conversion.

In an embodiment, the apparatus further includes an equalization module. An input end of the equalization module is connected to the output end of the analog-to-digital conversion module, and an output end of the equalization module is connected to a first input end of the third adder.

Fig. 2 is a structural schematic diagram of another apparatus for eliminating baseline drift provided in an embodiment. As shown in Fig.2, the differences between the apparatus for eliminating baseline drift and the apparatus shown in Fig. 1 lie in that the digital compensation module 15 in Fig. 1 is equivalent to a third adder 151 in Fig. 2, and the analog compensation module 12 in Fig. 1 is equivalent to a fourth adder 121 in Fig. 2. Moreover, in Fig.2, an equalization module 21 is arranged between an analog-to-digital conversion module 14 and the third adder 151. An input end of the equalization module 21 is connected to an output end of the analog-to-digital conversion module 14, and an output end of the equalization module 21 is connected to a first input end of the third adder 151.

A front-end module 11 is connected to a first input end of the fourth adder 121, and an output end of a digital-to-analog conversion module 20 is connected to a second input end of the fourth adder 121. An output end of the fourth adder 121 is connected to an input end of an analog processing module 13. The fourth adder 121 is configured to output a difference between an output quantity of the front-end module 11 and a low-frequency error component processed by a digital-to-analog conversion, so as to compensate for the analog processing module 13.

The equalization module 21 is connected to the first input end of the third adder 151, and an output end of a digital compensation acquisition module 18 is connected to a second input end of the third adder 151. An output end of the third adder 151 is connected to an input end of a decision module 16. The third adder 151 is configured to output a difference between an output quantity of the equalization module and a high-frequency error component, so as to compensate for the decision module 16.

In an embodiment, the equalization module 21 is configured to remove inter-symbol interference caused by a non-ideal channel.

In an embodiment, the decision module 16 further includes a decoding circuit, so as to correct some errors of the decision module 16.

In an embodiment, the error estimation module 17 may further include a filtering module, so as to remove effects of noise and false determinations.

In the apparatus for eliminating baseline drift provided in the embodiment, the digital compensation acquisition module may be implemented in the following two modes. According to a principle of a feedback loop, a proportional amplifying circuit or a lead compensation circuit may be used to improve a response speed of loop feedback.

In the first implementation mode, the digital compensation acquisition module includes a first proportional amplifying circuit having a gain of a first preset parameter. An input end of the first proportional amplifying circuit is connected to an output end of the error estimation module, and an output end of the first proportional amplifying circuit is connected to a second input end of a digital compensation module (or the third adder).

In the second implementation mode, the digital compensation acquisition module includes: a lead compensation circuit having a gain of a second preset parameter. An input end of the lead compensation circuit is connected to the output end of the error estimation module, and an output end of the lead compensation circuit is connected to the second input end of the digital compensation module (or the third adder).

In an embodiment, a system function of the lead compensation circuit may be

$$H(\text{s}) = \frac{T_D s + 1}{\alpha T_D s + 1},$$

$a$ and $T_D$ being preset parameters, and $\alpha < 1$. A value of

$$\frac{1}{T_D}$$

is close to a loop bandwidth of the lead compensation circuit, and then a value of $\alpha$ is adjusted to enable the lead compensation circuit make a balance of a lead phase and a high-frequency gain, so as to take into account of a response speed and compensation accuracy of a system.

In the apparatus for eliminating baseline drift provided in the embodiment, an analog compensation acquisition module may also be implemented in the following two modes. According to the principle of the feedback loop, an integrating circuit or a proportional integrating circuit may be used to reduce a steady-state error of a loop feedback system.

In the first implementation mode, the analog compensation acquisition module includes a first integrating circuit having a gain of a third preset parameter. An input end of the first integrating circuit is connected to the output end of the error estimation module, and an output end of the first integrating circuit is connected to an input end of the digital-to-analog conversion module.

In the second implementation mode, the analog compensation acquisition module includes: a second integrating circuit having a gain of a fourth preset parameter, a second proportional amplifying circuit having a gain of a fifth preset parameter and a second adder. An input end of the second integrating circuit is connected to the output end of the error estimation module, the output end of the error estimation module is further connected to an input end of the second proportional amplifying circuit, an output end of the second integrating circuit is connected to a first input end of the second adder, an output end of the second proportional amplifying circuit is connected to a second input end of the second adder, and an output end of the second adder is connected to the input end of the digital-to-analog conversion module.

On the basis of the two implementation modes of the digital compensation acquisition module and the two implementations of the analog compensation acquisition module, four kinds of apparatuses for eliminating baseline drift may be obtained. As an example with the digital compensation module as the third adder, the analog compensation module as the fourth adder, and the apparatus for eliminating baseline drift including the equalization module, the specific structures of the four kinds of apparatuses for eliminating baseline drift are described below.

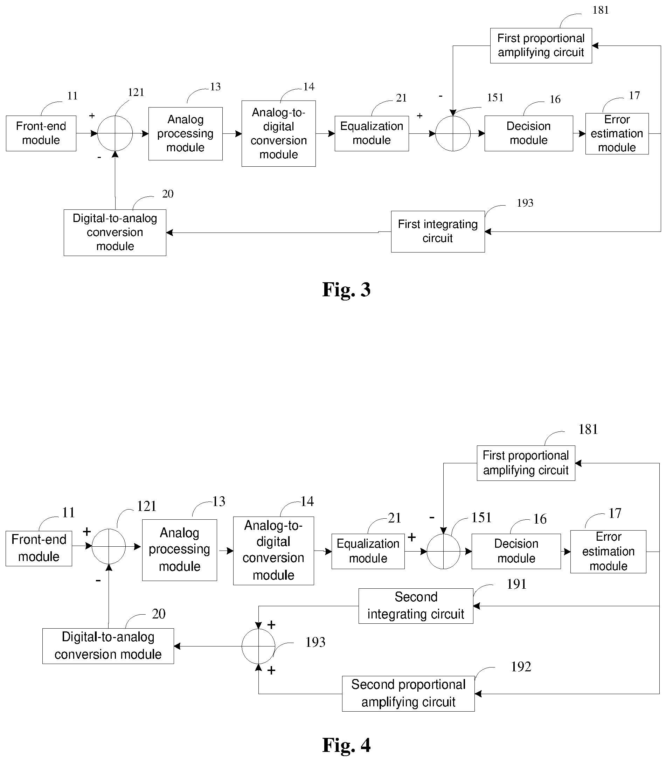

Fig. 3 is a structural schematic diagram of yet another apparatus for eliminating baseline drift provided in an embodiment. As shown in Fig. 3, in the apparatus for eliminating baseline drift, a digital compensation acquisition module includes a first proportional amplifying circuit 181 having a gain of a first preset parameter. An analog compensation acquisition module includes a first integrating circuit 193 having a gain of a third preset parameter.

An output end of an error estimation module 17 is connected to an input end of the first proportional amplifying circuit 181. An output end of the first proportional amplifying circuit 181 is connected to a second input end of a third adder 151, and an output end of the equalization module 21 is connected to a first input end of the third adder 151. An output end of the third adder 151 is connected to an input end of a decision module 16.

An output end of the error estimation module 17 is connected to an input end of a first integrating circuit 193. An output end of the first integrating circuit 193 is connected to an input end of a digital-to-analog conversion module 20. Other connection modes are the same as those in Figs. 1 and 2, and will not be repeated herein.

Fig. 4 is a structural schematic diagram of still another apparatus for eliminating baseline drift provided in an embodiment. As shown in Fig. 4, in the apparatus for eliminating baseline drift, a digital compensation acquisition module includes a first proportional amplifying circuit 181 having a gain of a first preset parameter. An analog compensation acquisition module includes: a second integrating circuit 191 having a gain of a fourth preset parameter, a second proportional amplifying circuit 192 having a gain of a fifth preset parameter and a second adder 194.

A connection mode of a first proportional amplifying circuit 181 is the same as that in Fig. 3, and will not be repeated herein.

An input end of the second integrating circuit 191 is connected to an output end of an error estimation module 17. The output end of the error estimation module 17 is further connected to an input end of the second proportional amplifying circuit 192. An output end of the second integrating circuit 191 is connected to a first input end of the second adder 194. An output end of the second proportional amplifying circuit 192 is connected to a second input end of the second adder 194. An output end of the second adder 194 is connected to an input end of a digital-to-analog conversion module 20. Other connection modes are the same as those in Figs. 1 and 2, and will not be repeated herein.

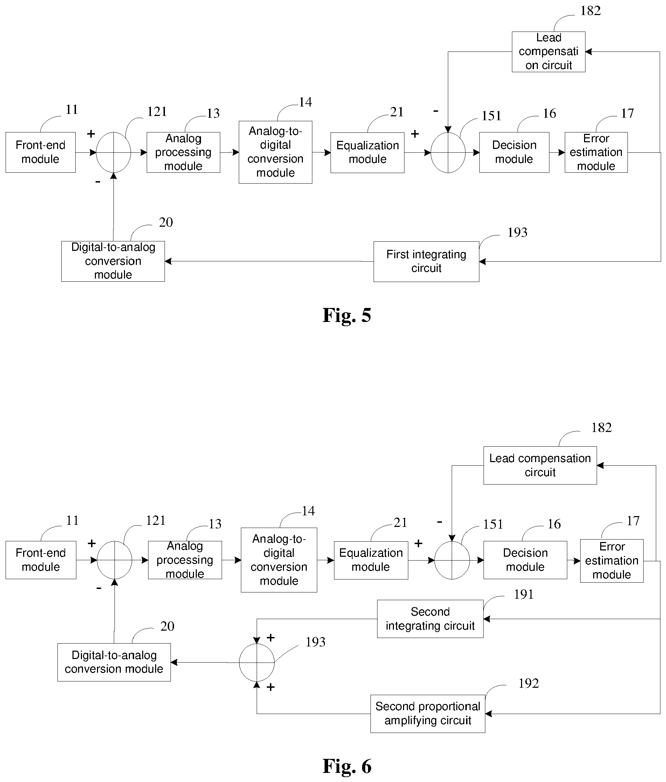

Fig. 5 is a structural schematic diagram of yet another apparatus for eliminating baseline drift provided in an embodiment. As shown in Fig. 5, in the apparatus for eliminating baseline drift, a digital compensation acquisition module includes a lead compensation circuit 182 having a gain of a second preset parameter, and a system function of the lead compensation circuit is

$$H(\mathrm{s}) = \frac{T_D s + 1}{\alpha T_D s + 1}$$

. An analog compensation acquisition module includes a first integrating circuit 193 having a gain of a third preset parameter.

An input end of the lead compensation circuit 182 is connected to an output end of an error estimation module 17, and an output end of the lead compensation circuit 182 is connected to a second input end of a third adder 151. An output end of an equalization module 21 is connected to a first input end of the third adder 151. An output end of the third adder 151 is connected to an input end of a decision module 16.

A connection mode of the first integrating circuit 193 is the same as that in Fig. 3, and will not be repeated herein.

Fig. 6 is a structural schematic diagram of yet another apparatus for eliminating baseline drift provided in an embodiment. As shown in Fig. 6, in the apparatus for eliminating baseline drift, a digital compensation acquisition module includes a lead compensation circuit 182 having a gain of a second preset parameter, and a system function of the lead compen-

$$H(\mathrm{s}) = \frac{T_D s + 1}{\alpha T_D s + 1}$$

sation circuit is . An analog compensation acquisition module includes: a second integrating circuit 191 having a gain of a fourth preset parameter, a second proportional amplifying circuit 192 having a gain of a fifth preset parameter and a second adder 194.

A connection mode of the lead compensation circuit 182 is the same as that in Fig. 5, and will not be repeated herein. Connection modes of the second integrating circuit 191, the second proportional amplifying circuit 192 and the second adder 194 are the same as those in Fig. 4, and will not be repeated herein.

In an embodiment, an integrating circuit of the analog compensation acquisition$^{-1}$ module may include an adder and a delay module. Taking the first integrating circuit as an example, an implementation mode of the integrating circuit of the analog compensation acquisition module will be described in detail below. A digital-domain system function of the first integrating circuit is:

$$Y = \frac{T}{2} \frac{1 + z^{-1}}{1 - z^{-1}} X$$

, T being a sampling period. Correspondingly, time-domain implementation thereof is as:

$$y(n) = \frac{T}{2}(x(n) + x(n-1)) + y(n-1)$$

,

which may be simplified as $y(n) = K_i x(n) + y(n\text{-}1)$, $K_i$ being the gain of the first integrating circuit, that is, the third preset parameter.

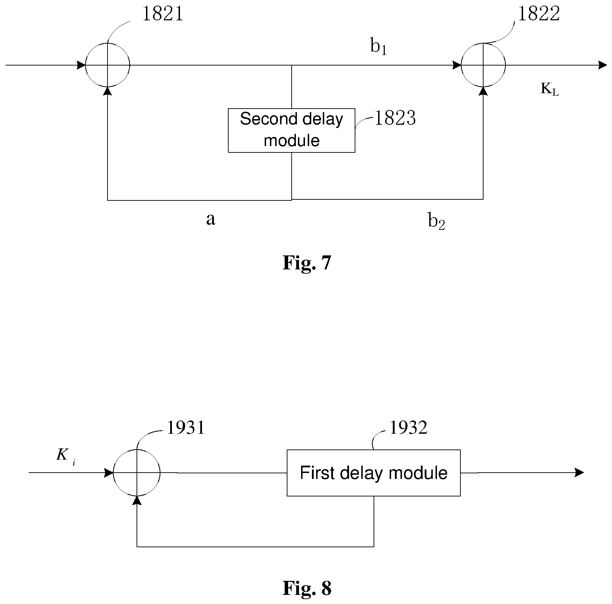

Fig. 8 is a structural schematic diagram of a first integrating circuit. As shown in Fig. 8, the first integrating circuit includes: a first adder 1931 and a first delay module 1932. An output end of an error estimation module is connected to an input end of a gain module (not shown in Fig. 8) having a gain of a third preset parameter (that is $K_i$), and an output end of the gain module is connected to a first input end of a first adder 1931. An output end of the first adder 1931 is connected to an input end of the first delay module 1932, and a first output end of the first delay module 1932 is connected to a second input end of the first adder 1931. A second output end of the first delay module 1932 is connected to an input end of a digital-to-analog conversion module.

In an embodiment, a system function based on

$$H(\mathrm{s}) = \frac{T_D s + 1}{\alpha T_D s + 1}$$

a lead compensation circuit is ,
and a bilinear transformation method, differential coefficient approximation or an impulse invariance method are used to transform the system function into digital-domain implementation, so as to obtain a time-domain expression: $y(n) = b_1{}^*x(n) + b_2{}^*x(n\text{ -}1) + a^*y(n\text{ -}1)$ . Fig. 7 is a structural schematic diagram of a lead compensation circuit. As shown in Fig. 7, a lead compensation circuit includes a fifth adder 1821, a sixth adder 1822, and a second delay module 1823. An output end of an error estimation module is connected to a first input end of the fifth adder 1821. An output end of the fifth adder 1821 is connected to an input end of the second delay module 1823 and a first input end of the sixth adder 1822 via a gain module having a gain of bl. An output end of the sixth adder 1822 is connected to a second input end of a digital compensation module or a second input end of a third adder via a gain module having a gain of a second preset parameter (that is, KL). An output end of the second delay module 1823 is connected to a second input end of the fifth adder 1821 via a gain module having a gain of a. The output end of the second delay module 1823 is further connected to a second input end of the sixth adder 1822 via a gain module having a gain of b2.

In the embodiment, the first delay module and the second delay module are both used to delay one beat to store data, such that data of a last beat stored by the delay module may be used in a current beat.

The apparatus for eliminating baseline drift provided in the embodiment includes: an analog processing module, an analog-to-digital conversion module, a decision module, an error estimation module, a digital compensation acquisition module, a digital compensation module, an analog compensation acquisition module, an analog compensation module and a digital-to-analog conversion module. The analog compensation acquisition module is configured to output a low-frequency error component in a baseline drift error according to the baseline drift error output by the error estimation module. The digital compensation acquisition module is configured to output a high-frequency error component in the baseline drift error according to the baseline drift error. Therefore, when baseline drift is to be eliminated, on the one hand, baseline drift compensation may be rapidly and accurately carried out. On the other hand, an influence of baseline drift on nonlinear distortion of an analog circuit is reduced, so as to improve accuracy of receiving a signal.

The embodiment further provides a receiver. The receiver includes a front-end module and the apparatus for eliminating baseline drift provided in any above embodiment and optional implementation mode. The receiver has the technical effect of the apparatus for eliminating baseline drift, and will not be repeated herein.

What is mentioned above is merely illustrative embodiments of the invention and is not intended to limit the scope of protection of the invention.

In general, the various embodiments of the invention may be implemented in hardware or special circuits, software, logic or any combination thereof. For example, some aspects may be implemented in hardware, while other aspects may be implemented in firmware or software which may be executed by controllers, microprocessors or other computing apparatus, although the invention is not limited thereto.

The block diagrams of any logic flow in the accompanying drawings of the invention may represent program steps, or interconnected logic circuits, modules and functions, or combinations of program steps, logic circuits, modules and functions. Computer programs may be stored in memories. The memories may be of any type suitable for the local technical environment and may be implemented by using any suitable data storage technology, such as, but not limited to, read only memories (ROMs), random access memories (RAMs), optical memory apparatuses, systems (digital versatile discs (DVD) or compact discs (CD)), etc. Computer readable media may include non-transitory storage media. Data processors may be of any type suitable for the local technology environment, such as, but not limited to, general-purpose computers, special-purpose computers, microprocessors, digital signal processors (DSPs), application-specific integrated circuits (ASICs), field programmable gate arrays (FGPAs) and processors based on multi-core processor architectures.

By means of illustrative and non-limiting examples, a detailed description of illustrative embodiments of the invention is provided above. In conjunction with the accompanying drawings and claims, various modifications and adaptations to the above embodiments would have been obvious to those skilled in the art, without departing from the scope of protection of the invention. Hence, the appropriate scope of the invention will be determined according to claims.

## Claims

1. An apparatus for eliminating baseline drift, comprising:

   an analog processing module, an analog-to-digital conversion module, a decision module, an error estimation module, a digital compensation acquisition module, a digital compensation module, an analog compensation acquisition module, an analog compensation module and a digital-to-analog conversion module;
   wherein an output end of a front-end module is connected to a first input end of the analog compensation module, an output end of the digital-to-analog conversion module is connected to a second input end of the analog compensation module, and an output end of the analog compensation module is connected to an input end of the analog processing module;
   an output end of the analog processing module is connected to an input end of the analog-to-digital conversion module;
   an output end of the analog-to-digital conversion module is connected to a first input end of the digital compensation module, an output end of the digital compensation acquisition module is connected to a second input end of the digital compensation module, and an output end of the digital compensation module is connected to an input end of the decision module;
   an output end of the decision module is connected to an input end of the error estimation module, an output end of the error estimation module is connected to an input end of the digital compensation acquisition module, and the output end of the error estimation module is further connected to an input end of the analog compensation acquisition module;
   an output end of the analog compensation acquisition module is connected to an input end of the digital-to-analog conversion module; and
   the error estimation module is configured to output a baseline drift error according to a determination error output by the decision module, the digital compensation acquisition module is configured to output a high-frequency error component in the baseline drift error according to the baseline drift error, the analog compensation acquisition module is configured to output a low-frequency error component in the baseline drift error according to the baseline drift error, the analog compensation module is configured to compensate for the analog processing module according to the low-frequency error component processed by a digital-to-analog conversion, and the digital compensation module is configured to compensate for the decision module according to the high-frequency error component.

2. The apparatus according to claim 1, wherein the digital compensation acquisition module comprises a first proportional amplifying circuit having a gain of a first preset parameter,

an input end of the first proportional amplifying circuit is connected to the output end of the error estimation module, and an output end of the first proportional amplifying circuit is connected to the second input end of the digital compensation module.

3. The apparatus according to claim 1, wherein the digital compensation acquisition module comprises: a lead compensation circuit having a gain of a second preset parameter, an input end of the lead compensation circuit is connected to the output end of the error estimation module, and an output end of the lead compensation circuit is connected to the second input end of the digital compensation module.

4. The apparatus according to claim 3, wherein a system function of the lead compensation circuit is

$$H(\mathrm{s}) = \frac{T_D s + 1}{\alpha T_D s + 1}$$

, $\alpha$ and $T_D$ being preset parameters, and $\alpha$ being less than 1.

5. The apparatus according to claim 1, wherein the analog compensation acquisition module comprises a first integrating circuit having a gain of a third preset parameter, an input end of the first integrating circuit is connected to the output end of the error estimation module, and an output end of the first integrating circuit is connected to the input end of the digital-to-analog conversion module.

6. The apparatus according to claim 5, wherein the first integrating circuit comprises: a first adder and a first delay module; and the output end of the error estimation module is connected to an input end of a gain module having a gain of a third preset parameter, an output end of the gain module is connected to a first input end of the first adder, an output end of the first adder is connected to an input end of the first delay module, a first output end of the first delay module is connected to a second input end of the first adder, a second output end of the first delay module is connected to the input end of the digital-to-analog conversion module.

7. The apparatus according to claim 1, wherein the analog compensation acquisition module comprises: a second integrating circuit having a gain of a fourth preset parameter, a second proportional amplifying circuit having a gain of a fifth preset parameter and a second adder; and an input end of the second integrating circuit is connected to the output end of the error estimation module, the output end of the error estimation module is further connected to an input end of the second proportional amplifying circuit, an output end of the second integrating circuit is connected to a first input end of the second adder, an output end of the second proportional amplifying circuit is connected to a second input end of the second adder, and an output end of the second adder is connected to the input end of the digital-to-analog conversion module.

8. The apparatus according to any one of claims 1 to 7, wherein the digital compensation module serves as a third adder and is configured to output a difference between an output quantity of the analog-to-digital conversion module and the high-frequency error component; and the analog compensation module serves as a fourth adder and is configured to output a difference between an output quantity of the front-end module and the low-frequency error component processed by a digital-to-analog conversion.

9. The apparatus according to claim 8, further comprising an equalization module, wherein an input end of the equalization module is connected to the output end of the analog-to-digital conversion module, and an output end of the equalization module is connected to a first input end of the third adder.

10. A receiver, comprising a front-end module and the apparatus for eliminating baseline drift as claimed in any one of claims 1 to 9.

18

Digital
compensation
acquisition
module

11            12            13            14            15            16            17

| Front-end module | Analog compensation module | Analog processing module | Analog-to-digital conversion module | Digital compensation module | Decision module | Error estimation module |

20                                    19

Digital-to-analog conversion module

Analog compensation acquisition module

**Fig. 1**

18

Digital compensation acquisition module

11            121        13            14            21        -        151        16            17

| Front-end module | + | | Analog processing module | Analog-to-digital conversion module | Equalization module | + | Decision module | Error estimation module |

-

20                                    19

Digital-to-analog conversion module

Analog compensation acquisition module

**Fig. 2**

**Fig. 3**

**Fig. 4**

Fig. 5

Fig. 6

1821

b₁

1822

Kₗ

Second delay module ⌐1823

a

b₂

**Fig. 7**

1931

1932

Kᵢ

First delay module

**Fig. 8**

## INTERNATIONAL SEARCH REPORT

| International application No. |
| --- |
| **PCT/CN2020/131828** |

**A. CLASSIFICATION OF SUBJECT MATTER**

H04B 1/12(2006.01)i; H03M 1/10(2006.01)i

According to International Patent Classification (IPC) or to both national classification and IPC

**B. FIELDS SEARCHED**

Minimum documentation searched (classification system followed by classification symbols)

H04B, H04L, H03M

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT; 3GPP: 基线, 漂移, 偏移, 飘移, 消除, 补偿, 校准, 校正, 高频, 低频, 误差, 模拟, 数字, baseline, drift, eliminate, correlate, analog, digital, high, low, frequency, error

**C. DOCUMENTS CONSIDERED TO BE RELEVANT**

| Category* | Citation of document, with indication, where appropriate, of the relevant passages | Relevant to claim No. |
| --- | --- | --- |
| X | CN 102480292 A (HIMAX MEDIA SOLUTIONS INC.) 30 May 2012 (2012-05-30) description, paragraphs 35-53, figure 1 | 1-10 |
| A | CN 109039964 A (NXP B.V.) 18 December 2018 (2018-12-18) entire document | 1-10 |
| A | CN 102164104 A (SHENZHEN LANDWIND INDUSTRY CO., LTD.) 24 August 2011 (2011-08-24) entire document | 1-10 |
| A | CN 101261863 A (ROHM CO., LTD.) 10 September 2008 (2008-09-10) entire document | 1-10 |
| A | US 2010168595 A1 (INDUSTRIAL TECHNOLOGY RESEARCH INSTITUTE) 01 July 2010 (2010-07-01) entire document | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 February 2021** | **26 February 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/131828**

| Patent document cited in search report | | | Publication date (day/month/year) | Patent family member(s) | | | Publication date (day/month/year) |
|---|---|---|---|---|---|---|---|
| CN | 102480292 | A | 30 May 2012 | None | | | |
| CN | 109039964 | A | 18 December 2018 | EP | 3413525 | B1 | 05 February 2020 |
| | | | | US | 2018358953 | A1 | 13 December 2018 |
| | | | | US | 10284180 | B2 | 07 May 2019 |
| | | | | EP | 3413525 | A1 | 12 December 2018 |
| CN | 102164104 | A | 24 August 2011 | None | | | |
| CN | 101261863 | A | 10 September 2008 | CN | 101261863 | B | 15 June 2011 |
| | | | | JP | 4846626 | B2 | 28 December 2011 |
| | | | | TW | 200842842 | A | 01 November 2008 |
| | | | | JP | 2008217941 | A | 18 September 2008 |
| | | | | US | 2008218890 | A1 | 11 September 2008 |
| | | | | US | 7889446 | B2 | 15 February 2011 |
| US | 2010168595 | A1 | 01 July 2010 | TW | 201025857 | A | 01 July 2010 |
| | | | | TW | I481196 | B | 11 April 2015 |
| | | | | US | 8568329 | B2 | 29 October 2013 |

Form PCT/ISA/210 (patent family annex) (January 2015)